# EUROPEAN PATENT SPECIFICATION

(11) **EP 4 228 072 B1**
(45) Date of publication and mention of the grant of the patent: **05.08.2026**
(21) Application number: 22784791.0
(22) Date of filing: 14.03.2022
(51) Int. Cl.: H01M 50/342, H01M 50/30, H01M 50/308, H01M 50/167, H01M 10/04, H01M 4/04

(54) **SECONDARY BATTERY AND MANUFACTURING METHOD OF SAME**
SEKUNDÄRBATTERIE UND HERSTELLUNGSVERFAHREN DAFÜR
BATTERIE SECONDAIRE ET SON PROCÉDÉ DE FABRICATION

(30) Priority: 08.04.2021 KR 20210045794
(43) Date of publication of application: 16.08.2023
(73) Proprietor: LG Energy Solution, Ltd., Seoul 07335 (KR)
(72) Inventor: HAN, Woo Ri, Daejeon 34122 (KR)
(74) Representative: Goddar, Heinz J.
(86) International application number: PCT/KR2022/003519
(87) International publication number: WO 2022/215881

(56) References cited:
- EP-A1- 1 930 113
- EP-A1- 4 102 635
- CN-A- 108 064 421
- CN-Y- 201 069 809
- KR-A- 20070 067 779
- KR-A- 20070 067 779
- KR-A- 20160 051 037
- KR-A- 20190 056 567
- KR-A- 20200 078 640
- KR-B1- 100 319 111
- KR-B1- 100 319 111

## Description

### [TECHNICAL FIELD]

The present disclosure relates to a secondary battery and a manufacturing method of the same, and more particularly to a secondary battery that can discharge gas generated in the activation process and a manufacturing method of the same.

### [BACKGROUND ART]

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, along with the technology development and increased demand for mobile devices, demand for batteries as energy sources has been increasing rapidly, and accordingly, much research on batteries which can meet the various needs has been carried out.

Typically, the demand for the lithium secondary battery, such as a lithium ion battery or a lithium ion polymer battery, which have advantages such as a high energy density, a discharge voltage, an output stability, and the like is high.

Further, the secondary battery may be classified on the basis of the structure of an electrode assembly having a structure in which a cathode and an anode are stacked with a separator being interposed therebetween. Typically, there may mentioned, for example, a jelly-roll type electrode assembly having a structure in which long sheets of cathodes and anodes are wound in the state in which a separator is interposed therebetween, a stacked type electrode assembly having a structure in which pluralities of cathodes and anodes, cut by a certain size unit, are sequentially stacked in the state in which separators are interposed therebetween, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly, having a structure in which unit cells stacked with predetermined units of the cathodes and the anodes are sequentially wound with a separator being interposed therebetween in the state of having been placed on a separation film.

Further, based on the shape of a battery case, the secondary battery is classified into a cylindrical battery where an electrode assembly is mounted in a cylindrical case, a prismatic battery where an electrode assembly is mounted in a prismatic can, and a pouch type battery where an electrode assembly is mounted in a pouch type case of an aluminum laminate sheet.

Meanwhile, a secondary battery should satisfy performance suitable for the intended use and at the same time, has safety, thereby capable of being suitably used in the market. When designing a secondary battery, the design factors are determined in consideration of these performance and safety aspects at the same time. Batteries whose design and manufacturing have been completed are subjected to performance evaluations such as lifespan, high rate characteristics, and high/low temperature characteristics, as well as to safety evaluations such as overcharge, over-discharge, impact, nail test, and hot box.

Among various types of secondary batteries, a cylindrical secondary battery may include a current interrupt device (CID) that interrupts the current between the electrode terminal and the electrode tab to prevent an additional reaction from occurring if gas is suddenly generated inside the secondary battery under abnormal conditions such as overcharging and the internal pressure exceeds a certain level.

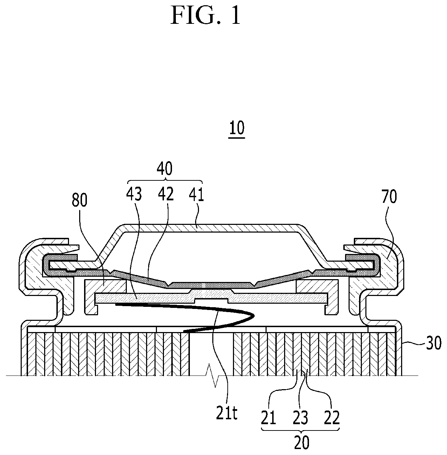

Fig. 1 is a partial cross-sectional view which shows a cross section of an upper part of a conventional cylindrical secondary battery.

Referring to Fig. 1, an electrode assembly 20 is housed in a cylindrical case 30, and a cap assembly 40 is mounted on the opened upper part of the cylindrical case 30, thereby capable of manufacturing a cylindrical secondary battery 10.

The electrode assembly 20 may be a jelly-roll type electrode assembly in which a first electrode 21, a second electrode 22 and a separator 23 are rolled.

The cap assembly 40 may include an upper end cap 41, a safety vent 42 for lowering an internal pressure, and a current interruption device (CID) 43. The upper end cap 41 and the safety vent 42 may form a structure closely contacting with each other, and the safety vent 42 may form a structure connected to a central part of the current interruption device 43. A first electrode tab 21t protruding from the first electrode 21 may be connected to a lower end part of the current interruption device 43. Here, the first electrode 21 may be a cathode, and the first electrode tab 21t may be a cathode tab.

As described above, the upper end cap 41 can be directly or indirectly connected to the safety vent 42, the current interruption device 43 and the first electrode tabs 21t, thereby being electrically connected to the electrode assembly 20 and functioning as an electrode terminal.

Meanwhile, a gasket 70 for sealing between the cap assembly 40 and the cylindrical case 30, and a CID gasket 80 wrapping around an edge of the current interruption device 43 may be arranged.

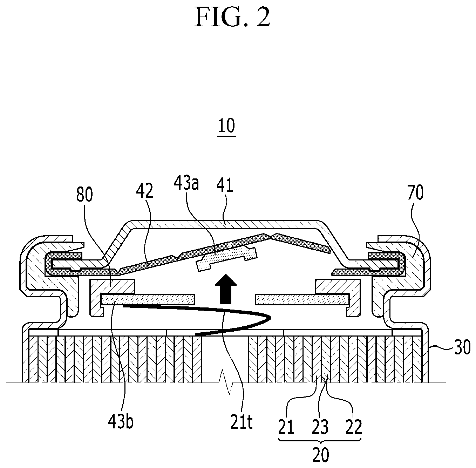

Fig. 2 is a partial cross-sectional view which shows a state when the internal pressure of the cylindrical secondary battery of Fig. 1 is increased.

Referring to Fig. 2, when the cylindrical secondary battery 10 is exposed to high temperature or is placed in an abnormal operating state to increase the internal pressure, the shape of the safety vent 42 is reversed, and the current interrupt device 43 is separated to interrupt the current. Specifically, the current interrupt device 43 is divided into a portion 43a connected to the safety vent 42 and a portion 43b connected to the first electrode tab 21t, so that the flow of current between the upper end cap 41 and the first electrode tab 21t functioning as an electrode terminal is interrupted. Further, if the internal pressure is increased significantly, the notch portion of the safety vent 42 is cut, the safety vent 42 is opened, and the internal gas is discharged.

When the upper end cap 41 is provided as in the conventional cylindrical secondary battery 10, the structural rigidity is excellent, but when the internal gas is discharged while the safety vent 42 is opened, there is a drawback in that a spatial portion is degraded by the upper cap 41 and thus, the safety vent 42 cannot be fully opened and the gas discharge is restricted.

On the other hand, generally, a lithium secondary battery performs a formation step, that is, an activation step, during the manufacturing process. The activation step is a process of assembling the battery and then performing charging and discharging to activate the battery, wherein lithium ions emitted from the cathode during charging are intercalated while moving to the anode, and at this time, a solid electrolyte interface (SEI) film is formed on the surface of the anode. This activation step is generally performed by repeating charge/discharge with a constant current or constant voltage in a certain range.

In such an activation step, a large amount of gas is generated due to the formation of the electrode film or the decomposition of moisture inside the cell. Since the amount of gas generated in the activation step is large and it continuously reacts with the electrode film, a step of discharging the same is necessary, which is called a degas process.

However, referring to Figs. 1 and 2 again, the conventional cylindrical secondary battery 10 must maintain airtightness after injection of the electrolyte solution and thus, it is not easy to discharge gas generated in the activation step. If the gas generated in the activation step is not discharged, it may interfere with the cell reaction between the cathode and the anode, which may adversely affect the initial capacity of the battery, the formation of a stable solid electrolyte interface (SEI), and life performance exhibition characteristics. In addition, the gas cannot be discharged, which may thus affect the results of the above-mentioned safety evaluation.

Therefore, there is a need to develop a cylindrical secondary battery capable of discharging gas generated in the activation step.

EP 4 102 635 A1, which constitutes prior art pursuant to Art. 54(3) EPC, discloses a secondary battery. The secondary battery comprises an electrode assembly; a can configured to accommodate the electrode assembly; an electrolyte impregnated into the electrode assembly while being injected into the can; and a cap assembly mounted on an opening of the can, wherein the cap assembly comprises: a top cap in which a top hole is formed to pass vertically; a safety vent which is provided under the top cap and in which a vent hole is formed to pass vertically; and a current interrupt device (CID) filter which is provided under the safety vent, to which a positive electrode tab provided in the electrode assembly is coupled, and in which a CID hole is formed to pass vertically, wherein the CID hole is closed or opened by the positive electrode tab.

KR 20160051037 A discloses a secondary battery including a cap assembly, capable of effectively discharging gas generated inside a secondary battery to the outside. The disclosure relates to a cap assembly, combined with an open end of a battery can, for a secondary battery. The cap assembly comprises: a top cap to form a positive pole terminal by being arranged in a shape protruding from the top part; a safe bent to form a sealed space at the bottom of the top cap and arranged to connect the top cap with an outer circumference; a current block member in which an upper part is connected to a lower end of the safe bent and in which a lower part is connected to the electrode assembly; a first valve unit installed by penetrating the safe bent and the current block member, in which a one end unit is arranged to connect to the sealed space, and in which another end unit is arranged to connect with the inside of the battery can; and a second valve unit installed by penetrating the top cap, in which the one end unit is exposed outside the top cap, and in which another end unit is arranged to connect with the sealed space. The first valve unit and the second valve unit are individually opened and closed in accordance with the predetermined pressure.

### [SUMMARY]

### [Technical Problem]

It is an object of the present disclosure to provide a secondary battery that can discharge gas after pre-activation process or activation process and a manufacturing method of the same.

However, the problem to be solved by the embodiments of the present disclosure is not limited to the above-described problems, and can be variously expanded within the technical idea included in the present disclosure.

### [Technical Solution]

The invention is defined by the independent claims. Advantageous embodiments are subject to the dependent claims.

According to one embodiment of the present disclosure, there is provided a secondary battery comprising: an electrode assembly; a cylindrical battery case that houses the electrode assembly and has an open upper end; and a cap assembly coupled to the open upper end (or opened upper part) of the battery case. The safety vent has a groove-like notch structure configured to be broken in response to internal pressure of the secondary battery to discharge internal gas. The cap assembly comprises a safety vent exposed to the outside from the upper end, wherein a discharge hole is formed in the safety vent that is a disk-shaped plate, and wherein the discharge hole is filled nd sealed with a sealing block.

The sealing block may be joined to the discharge hole by ball welding.

One end of the upper part of the battery case may be bent to wrap around an outer peripheral part of the safety vent and form a crimping part.

The safety vent may include a curling part that is bent at the outer peripheral part of the safety vent, and the crimping part may wrap around the curling part to make a crimp coupling.

The cap assembly may include a current interrupt device located below the safety vent, and a central part of the safety vent and the current interrupt device may be connected to each other. The discharge hole may be located between the central part and the outer peripheral part of the safety vent.

According to another embodiment of the present disclosure, there is provided a method for manufacturing a secondary battery, the method comprising: a step of housing an electrode assembly in a cylindrical battery case having an opened upper part (also denoted open upper end of the battery case); a step of coupling a cap assembly formed with a discharge hole to the opened upper part of the battery case; a gas discharge step of discharging gas inside the battery case to the outside through the discharge hole; and a sealing step of filling a sealing block (also referred to as a block) in the discharge hole, wherein the cap assembly comprises a safety vent that is a disk-shaped plate exposed to the outside from the upper part, and wherein the discharge hole is formed in the safety vent. The safety vent has a groove-like notch structure configured to be broken in response to internal pressure of the secondary battery to discharge internal gas.

In the sealing step, the block may be joined to the discharge hole by ball welding.

The diameter of the block may be larger than the inner diameter of the discharge hole, and the block is launched into the discharge hole, so that the block can be inserted into the discharge hole.

The step of coupling the cap assembly may include a step of bending one end of the upper part of the battery case to form a crimping part that wraps around the safety vent.

The safety vent may include a curling part that is bent at an outer peripheral part of the safety vent, and a crimp coupling may be made so that the crimping part wraps around the curling part.

The method for manufacturing a secondary battery may further include a pre-activation step of activating the electrode assembly in advance. In the gas discharge step, gas generated in the pre-activation step may be discharged to the outside through the discharge hole.

The method for manufacturing a secondary battery may further include an activation step of activating the electrode assembly. The activation step may be performed after the sealing step.

The method for manufacturing a secondary battery may further include a temporary sealing step of temporarily sealing the discharge hole; an activation step of activating the electrode assembly; and a temporary sealing release step of releasing the temporary sealing state of the discharge hole. In the gas discharge step, gas generated in the activation step may be discharged to the outside through the discharge hole.

The gas discharge step may be performed simultaneously with the temporary seal release step or immediately after the temporary sealing release step.

The sealing step may be performed after the gas discharge step.

### [Advantageous Effects]

According to embodiments of the present invention, the upper end cap is removed and the safety vent is exposed to the outside to eliminate the spatial restriction on the safety vent, so that the safety vent can be completely opened when the internal pressure rises, which can thus be effective for gas discharge.

In addition, since the safety vent is exposed to the outside, a separate discharge hole is formed in the safety vent, so that gas generated in the pre-activation process or the activation process can be easily discharged. Therefore, it is possible to solve problems such as expansion and deformation of the electrode assembly caused by gas, and problems of lithium deposition caused by residual gas bubbles.

The effects of the present disclosure are not limited to the effects mentioned above and additional other effects not described above will be clearly understood from the description of the appended claims by those skilled in the art.

### [BRIEF DESCRIPTION OF THE DRAWING]

Fig. 1 is a partial cross-sectional view which shows a cross section of an upper part of a conventional cylindrical secondary battery;
Fig. 2 is a partial cross-sectional view which shows a state when the internal pressure of the cylindrical secondary battery of Fig. 1 is increased;
Fig. 3 is an exploded perspective view of a secondary battery according to an embodiment of the present disclosure;
Fig. 4 is a cross-sectional perspective view of a safety vent included in the secondary battery of Fig. 3;
Fig. 5 is a cross-sectional view of an upper part of a secondary battery according to an embodiment of the present disclosure;
Figs. 6 to 9 are cross-sectional views which explains a method for manufacturing a secondary battery according to an embodiment of the present disclosure; and
Figs. 10 to 13 are cross-sectional views which explains a method for manufacturing a secondary battery according to another embodiment of the present disclosure.

### [DETAILED DESCRIPTION]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

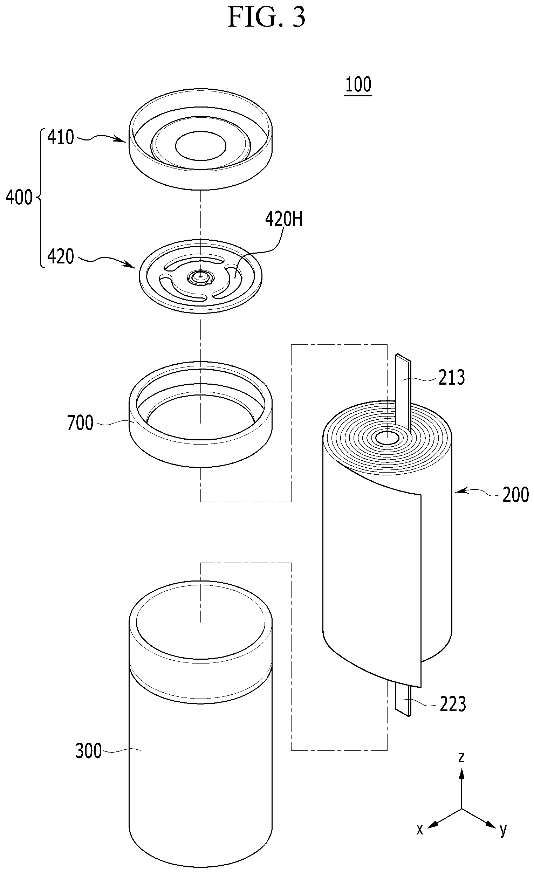

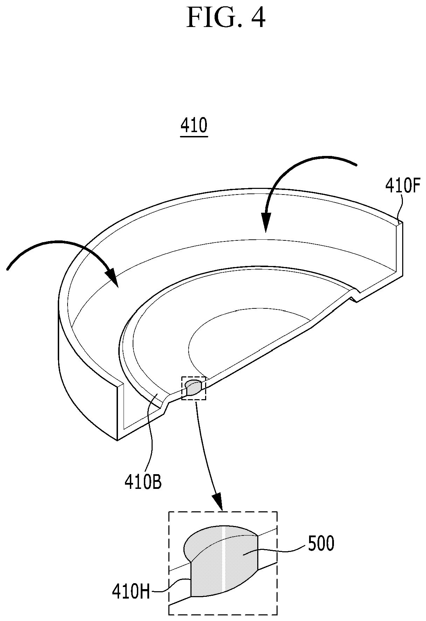

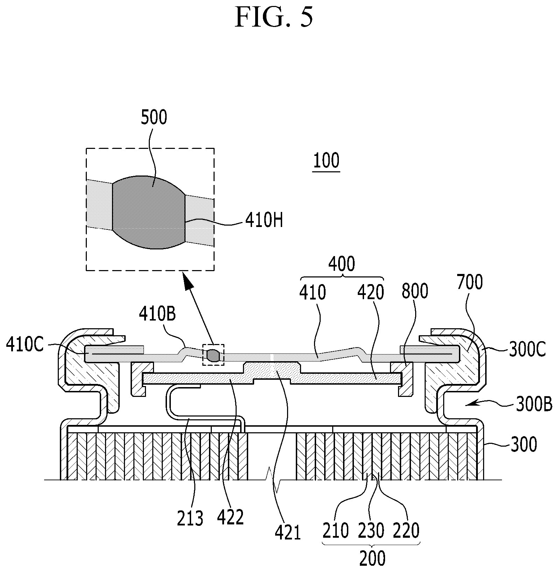

Further, throughout the description, when it is referred to as "planar", it means when a target portion is viewed from the upper side, and when it is referred to as "cross-sectional", it means when a target portion is viewed from the side of a cross section cut vertically
Fig. 3 is an exploded perspective view of a secondary battery according to an embodiment of the present disclosure. Fig. 4 is a cross-sectional perspective view of a safety vent included in the secondary battery of Fig. 3. Fig. 5 is a cross-sectional view of an upper part of a secondary battery according to an embodiment of the present disclosure. Particular, Fig. 5 is a cross-sectional view which shows the upper part of the cross-section taken along the xz plane after assembling the components of the secondary battery of Fig. 3.

Referring to Figs. 3 to 5, a secondary battery 100 according to one embodiment of the present disclosure includes an electrode assembly 200; a battery case 300 that houses the electrode assembly 200 and has an opened upper part; and a cap assembly 400 coupled to the opened upper part of the battery case 300.

First, the electrode assembly 200 according to the present embodiment may include a first electrode 210, a second electrode 220, and a separator 230. The first electrode 210, the second electrode 220, and the separator 230 can be rolled together to form a jelly-roll type electrode assembly 200. The separator 230 may be interposed between the first electrode 210 and the second electrode 220.

Although not specifically shown in the figure, the first electrode 210 may be formed by applying an electrode active material onto the first electrode current collector. Meanwhile, among the first electrode current collector, in a portion where a first electrode current collector is exposed without applying an electrode active material, a first electrode tab 213 can be joined by a method such as welding.

The second electrode 220 may be formed by applying an electrode active material onto the second electrode current collector. Meanwhile, among the second electrode current collector, in a portion where a second electrode current collector is exposed without applying an electrode active material, a second electrode tab 223 can be joined by a method such as welding.

At this time, the first electrode 210 may be a cathode, and the second electrode 220 may be an anode. Thereby, the first electrode tab 213 may be a cathode tab, and the second electrode tab 223 may be an anode tab. Meanwhile, with respect to the rolled electrode assembly 200, the first electrode tab 213 and the second electrode tab 223 may be protruded in mutually opposite directions. As shown in Fig. 3, the first electrode tab 213 may be protruded in a direction (z-axis direction) in which the cap assembly 400 is located, and the second electrode tab 223 may be protruded in a direction (-z-axis direction) in which the bottom part of the battery case 300 is located.

Meanwhile, the cylindrical case 300 is a structure for housing the electrode assembly 200 impregnated with an electrolyte solution, and may include a metallic material and may be a cylindrical case.

The cap assembly 400 according to the present embodiment includes a safety vent 410 exposed to the outside from the upper end. Such a safety vent 410 is formed with a discharge hole 410H, and the block 500 is filled in the discharge hole 410H. The discharge hole 410H and the block 500 will be described later. Meanwhile, the cap assembly 400 may include a current interrupt device (CID) 420 located under the safety vent 410.

Unlike a conventional cylindrical secondary battery 10 (see Fig. 1), the cap assembly 400 according to the present embodiment has a structure in which the upper end cap is removed, and the safety vent 410 may be exposed to the outside from the upper end.

Such a safety vent 410 is located on the current interrupt device 420 and may be electrically connected to the current interrupt device 420. Specifically, the central part of the safety vent 410 and the first portion 421 of the current interrupt device 420 described later may be physically and electrically connected to each other. A first electrode tab 213 protruding from the first electrode 210 may be connected to a lower end of the current interrupt device 420.

The safety vent 410 is a thin film structure through which current passes, and is a disk-shaped plate. The safety vent 410, the current interrupt device 420, and the first electrode tabs 213 are sequentially connected so that they can function as an electrode terminal that allows the safety vent 410 to guide the electrical connection of the electrode assembly 200.

The current interrupt device 420 according to the present embodiment is a plate material member through which current passes, wherein through-holes 420H for discharging gas may be formed. Further, the current interrupt device 420 may include a first portion 421 connected to the safety vent 410 and a second portion 422 connected to the first electrode tab 213, and the first portion 421 is located in the central part of the current interrupt device 420, and the second portion 422 may be located at an outer peripheral part of the current interrupt device 420.

When the internal pressure of the secondary battery 100 rises, the shape of the safety vent 410 may be reversed. In accordance with the shape reversal of the safety vent 410, the first portion 421 of the current interrupt device 420 rises together, so that the first portion 421 and the second portion 422 of the current interrupt device 420 can be separated from each other.

In order to induce such separation due to the rise in internal pressure, a space between the first portion 421 and the second portion 422 may be designed so as to have a slightly weak strength. The current between the safety vent 410 and the first electrode tab 213 is interrupted by the separation of the first portion 421 and the second portion 422.

Further, although not specifically shown in the figure, the safety vent 410 is provided with a type of groove-like notch structure. As the internal pressure rises, the notch structure is broken or torn, and the safety vent 410 is opened, and internal gas is discharged. In the case of a conventional cylindrical secondary battery 10 (see Fig. 1), since the upper end cap 41 is located above the safety vent 42, the spatial portion is poor and thus the safety vent 42 does not open completely. As a result, the gas cannot be effectively discharged. In addition, the upper end cap 41 itself may interfere with gas discharge. Unlike the same, since the secondary battery 100 according to the present embodiment has a structure in which a safety vent 410 is exposed from the upper end to the outside without the upper end cap, the shape reversal or separation of the safety vent 410 can be made freely when the internal pressure rises. Therefore, it is more effective in discharging gas as compared to the conventional cylindrical secondary battery 10 .

Next, the structure of the discharge hole 410H and the block 500 according to the present embodiment will be described in detail.

As described above, the safety vent 410 is formed with a discharge hole 410H with a penetration shape, and the block 500 is filled in the discharge hole 410H. As an example, the discharge hole 410H may be a circular through-hole, and the block 500 may be in the form of a ball. The ball-shaped block 500 may be joined to the discharge hole 410H by ball welding. Wherein, the ball welding refers to a joining method in which a ball-shaped structure is launched into a hole having a diameter smaller than that of the ball to close a hole. That is, as will be described later, the diameter of the ball-shaped block 500 before filling in the discharge hole 410H may be larger than the inner diameter of the discharge hole 410H. The block 500 can be strongly launched and forcibly inserting into the discharge hole 410H, thereby closing the discharge hole 410H.

As described above, a lithium secondary battery performs a formation step, that is, an activation step, during the manufacturing process. This activation step is generally performed by repeating charge/discharge with a constant current or constant voltage within a certain range. In this activation step, a large amount of gas is generated due to the formation of the electrode film or the decomposition of moisture inside the cell. Since the amount of gas generated in the activation step is large and it continuously reacts with the electrode film, a step of discharging the same is necessary, which is called a gas discharge or a degas process.

The secondary battery 100 according to the present embodiment may discharge gas generated in a pre-activation process or an activation process, which will be described later, to the outside through an exhaust hole 410H formed in the safety vent 410. Specifically, the pre-activation process or the activation process is performed on the secondary battery 100 in which the battery case 300 and the cap assembly 400 are coupled, and the gas generated in the above process is discharged to the outside through the discharge hole 410H. When discharge of gas is completed, the block 500 can be filled in the discharge hole 410H by the ball welding method described above, thereby sealing the secondary battery 100. The secondary battery 100 according to the present embodiment can easily discharge the gas inside the battery case 300, thereby preventing an increase of the internal pressure and deterioration of the performance. In other words, it is possible to solve problems such as expansion and deformation of the electrode assembly due to gas, and problems such as lithium deposition caused by residual gas bubbles.

Particularly, since the safety vent 410 according to the present embodiment has a structure exposed to the outside in accordance with the removal of the upper end cap, it is easy to form the discharge hole 410H for discharging gas. In the case of a conventional cylindrical secondary battery 10 (see Fig. 1), due to the presence of the upper cap 41, it is structurally quite difficult to re-close the discharge hole provided for discharging gas after the gas is discharged. In order to discharge the gas, a discharge hole must be formed in both the upper end cap 41 and the safety vent 42, but due to the presence of the upper end cap 41, it is structurally complicated and difficult to close the discharge hole formed in the safety vent 42. Unlike the same, since the cap assembly 400 according to the present embodiment has a structure in which the safety vent 410 is exposed at the uppermost end, it is easy to seal the discharge hole 410H after the gas is discharged. Ball welding, which is a mechanical joining method described above, can also be applied without limitation.

Meanwhile, the number of such discharge holes 410H is not particularly limited, but it may be arranged in a single number or a plurality of numbers in consideration of the degree of gas discharge.

Meanwhile, referring back to Fig. 5, the battery case 300 according to the present embodiment may include a crimping part 300C and a beading part 300B. The beading part 300B refers to a portion of the cylindrical battery case 300 that is recessed in the center direction of the electrode assembly 200 to prevent the electrode assembly 200 from flowing.

The crimping part 300C refers to a portion that is located above the beading part 300B and wraps around the cap assembly 400, and is for stable coupling of the cap assembly 400. An upper end of the battery case 300 may be bent to wrap around the cap assembly 400 and form a crimping part 300C. More specifically, one end of an upper part of the battery case 300 may be bent to wrap around the outer peripheral part of the safety vent 410 and form the crimping part 300C.

The sealing gasket 700 can be mounted on inner surfaces of the crimping part 300C and the beading part 300B to increase a sealing force between the cap assembly 400 and the battery case 300. That is, the gasket 700 is located between the battery case 300 and the cap assembly 400, and one end of an upper part of the battery case 300 is bent to perform a crimp coupling, thereby capable of forming the crimping part 300C. That is, mounting of the cap assembly 400 and sealing of the secondary battery 100 can be achieved by crimp coupling. The gasket 700 may be located between the crimping part 300C and the safety vent 410.

Meanwhile, the safety vent 410 according to the present embodiment may be formed with a bent part 410B. Specifically, as shown in Figs. 4 and 5, a portion of the safety vent 410 may be bent in an upward direction to form a bent part 410B. Such a bent part 410B is formed, which can reduce the deformation transferred to the safety vent 410 during crimp coupling. In addition, as described above, the first portion 421 of the current interrupt device 420 rises together due to the shape reversal of the safety vent 410 in an abnormal operating state, so that the first portion 421 and the second portion 422 of the current interrupt device 420 are separated from each other. As a result, the flow of current is interrupted, and a certain amount of gap is preferably formed between the safety vent 410 and the current interrupt device 420 for effectively interrupting the current. Thus, in order to increase the spacing between the safety vent 410 and the current interrupt device 420 while minimizing the height of the cap assembly 400 itself, a bent part 410B bent in an upward direction may be formed.

Meanwhile, in the case of the above-mentioned crimp coupling, strong physical compression may be applied to the cap assembly 400, which may cause a problem that the cap assembly 400 is damaged. In particular, as in the present embodiment, there is a risk that the safety vent 410 is damaged in a structure in which the safety vent 410 is exposed without the upper end cap. Nevertheless, if the thickness of the safety vent 410 is formed thicker than before in order to supplement the rigidity of the safety vent 410, there is a high possibility that the shape reversal or separation of the safety vent 410 is not realized properly when the internal pressure rises.

In the cap assembly according to the present embodiment, a curling part 410C may be provided in a portion corresponding to the crimping part 300C of the safety vent 410, rather than simply increasing the thickness of the safety vent 410. Specifically, the safety vent 410 may include a curling part 410C bent at the outer peripheral part of the safety vent 410. For convenience of explanation, Figs. 3 and 4 show the state of the flange part 410F before the curling part 410C is formed, and Fig. 5 shows a state in which the flange part 410F is bent inward to form the curling part 410C.

The crimping part 300C of the battery case 300 may wrap around the safety vent 410 with the gasket 700 interposed therebetween, but among them, a crimp coupling may be made while wrapping around the curling part 410C of the safety vent 410. Thus, the central part of the safety vent 410 is composed of one layer, but the outer peripheral part of the safety vent 410 wrapped by the crimping part 300C may be composed of two layers. That is, by providing the curling part 410C, an attempt was made to prevent damage to the safety vent 410 occurring during crimp coupling and at the same time, not to interfere with the shape reversal or separation of the safety vent 410 when the pressure resistance rises.

Meanwhile, the position of the discharge hole 410H is not particularly limited, but it is preferable that there is no restriction on the gas discharge. As an example, the discharge hole 410H according to the present embodiment may be located between a central part and an outer peripheral part of the safety vent 410. Here, the central part of the safety vent 410 means a portion connected to the first portion 421 of the current interrupt device 420, and the outer peripheral part of the safety vent 410 means a portion in which the curling part 410C is formed.

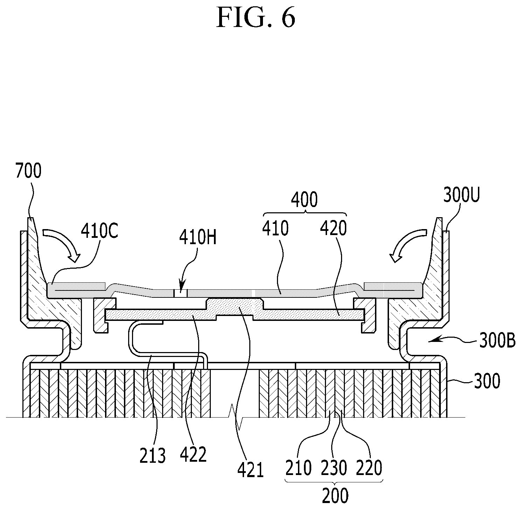

Next, a method for manufacturing a secondary battery according to one embodiment of the present disclosure will be described in detail with reference to Figs. 6 to 9. However, portions overlapping with the above contents will be omitted in order to avoid repetition of the description.

Figs. 6 to 9 are cross-sectional views which explains a method for manufacturing a secondary battery according to an embodiment of the present disclosure, which shows a cross-section of an upper part of the secondary battery.

First, referring to Figs. 3 and 6, a method for manufacturing a secondary battery according to one embodiment of the present disclosure includes a step of housing an electrode assembly 200 in a battery case 300 having an opened upper part, and a step of coupling a cap assembly 400 formed with a discharge hole 410H to the opened upper part of the battery case 300. At this time, as described above, the electrode assembly 200 may be in the form of a jelly roll in which the first electrode 210, the second electrode 220 and the separator 230 are rolled together, and the battery case 300 may be a cylindrical case. Further, the electrolyte solution may be injected into the battery case 300 together with the electrode assembly 200 before the cap assembly 400 is coupled.

The cap assembly 400 includes a safety vent 410 exposed to the outside from the upper end, wherein a discharge hole 410H may be formed in the safety vent 410. The specific structures of the safety vent 410 and the discharge hole 410H are described above, and thus a detailed description thereof will be omitted.

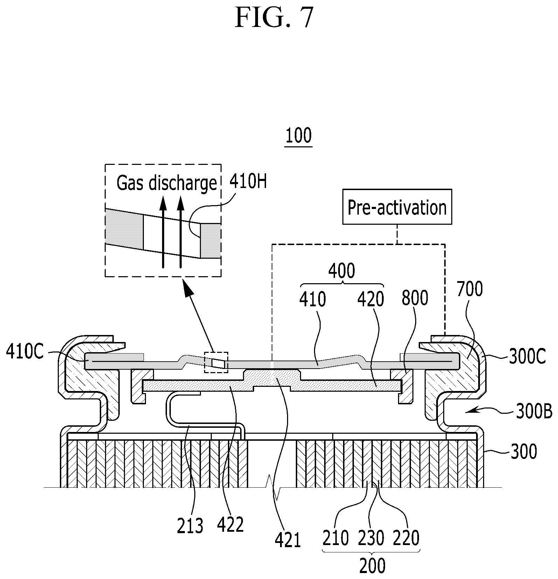

Referring to Figs. 6 and 7, the step of coupling a cap assembly 400 may include a step of bending the upper one end 300U of the battery case 300 to form a crimping part 300C that wraps around the safety vent 410. More specifically, the gasket 700 is located between the safety vent 410 of the cap assembly 400 and the battery case 300, and the upper end 300U of the battery case 300 is bent to perform crimp coupling.

At this time, the safety vent 410 may include a curling part 410C that is bent at the outer peripheral part of the safety vent 410, and a crimp coupling may be made so that the crimping part 300C wraps around the curling part 410C. The curling part 410C may be formed by bending the upward flange portion 410F (see Fig. 4 ) inward.

Next, referring to Fig. 7, the method for manufacturing a secondary battery according to the present embodiment includes a gas discharge step of discharging the gas inside the battery case 300 to the outside through the discharge hole 410H.

More specifically, the method for manufacturing a secondary battery according to the present embodiment includes a pre-activation step of activating the electrode assembly 200 housed in a battery case 300 in advance. Wherein, the pre-activation step is a step performed for discharging gas in advance before the activation step. That is, the pre-activation step is a step performed before the activation step for the purpose of generating gas. As an example, the pre-activation step can perform only charging at a low SOC (state of charge). However, the specific contents of the pre-activation step may vary depending on the model, and as another embodiment, it may be in the form of repeating charge and discharge with a constant current or constant voltage within a certain range.

In the pre-activation step, charge may be performed or charge and discharge may be repeated through the safety vent 410 and the battery case 300 functioning as electrode terminals. After the cap assembly 400 is coupled to the opened upper part of the battery case 300 by crimp coupling, the pre-activation step may be performed. In the gas discharge step, the gas generated in the pre-activation step may be discharged from the inside of the secondary battery 100 to the outside through the discharge hole 410H. That is, the pre-activation step proceeds in a state in which the discharge hole 410H is opened, and gas generated in that process may be discharged to the outside through the discharge hole 410H.

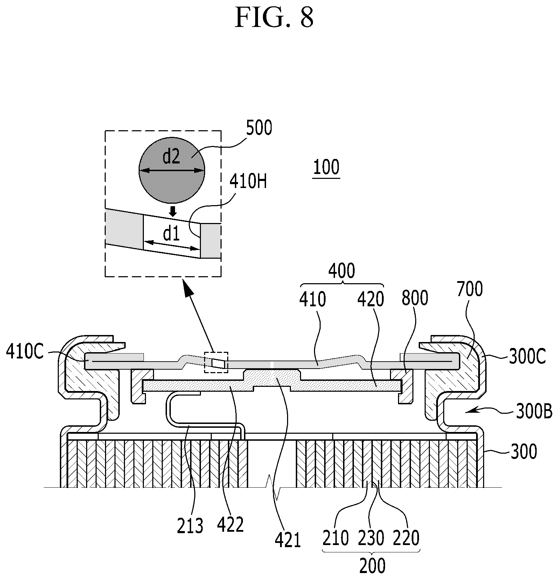

Next, referring to Fig. 8, the manufacturing method of the secondary battery according to the present embodiment includes a sealing step of filling the block 500 in the discharge hole 410H. In the sealing step, the block 500 may be joined to the discharge hole 410H by ball welding. The discharge hole 410H may be a circular through hole, and the block 500 may be in the form of a ball. The ball-shaped block 500 may be joined to the discharge hole 410H by ball welding.

Specifically, the diameter d2 of the ball-shaped block 500 may be larger than the inner diameter d1 of the discharge hole 410H, wherein the block 500 is strongly launched into the discharge hole 410H, so that the block 500 can be inserted into the discharge hole 410H. The discharge hole 410H may be sealed by using such forced insertion type ball welding.

As described above, since the secondary battery 100 according to the present embodiment has a structure in which the upper end cap is removed and the safety vent 410 is exposed at the uppermost end, it is easy to seal the discharge hole 410H by using the ball welding method after the gas is discharged.

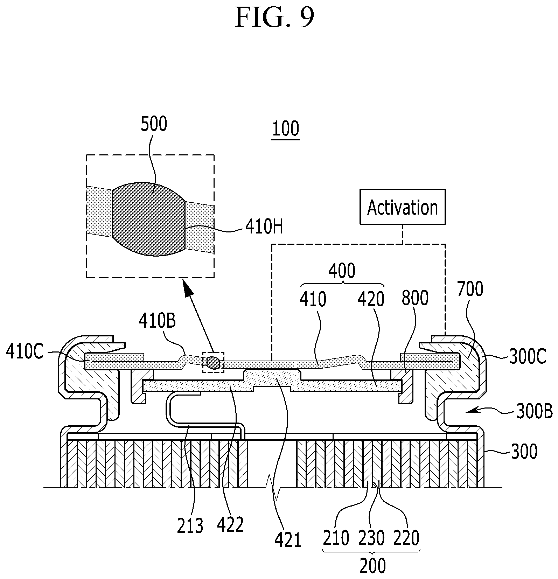

Next, referring to Fig. 9, the method of manufacturing the secondary battery according to the present embodiment may further include an activation step of activating the electrode assembly 200. The activation step may be performed after the sealing step. That is, after the gas generated in the pre-activation step is discharged, the discharge hole 410H is sealed in the sealing step. In this manner, in a state in which the secondary battery 100 is completely sealed, the activation step may be performed by repeating charge and discharge with a constant current or constant voltage within a certain range. The activation step is a step of repeatedly performing charge and discharge for the purpose of forming a solid electrolyte interface (SEI) film on the surface of the anode and selecting low voltage. By applying a constant current or a constant voltage to the safety vent 410 functioning as an electrode terminal and the battery case 300, charge and discharge may be repeated.

As described above, the secondary battery 100 manufactured according to one embodiment of the present invention proceeds the pre-activation step and discharges the gas generated in the process, thereby capable of solving problems such as expansion and deformation of the electrode assembly due to residual gas, or problems such as lithium precipitation caused by residual gas bubbles.

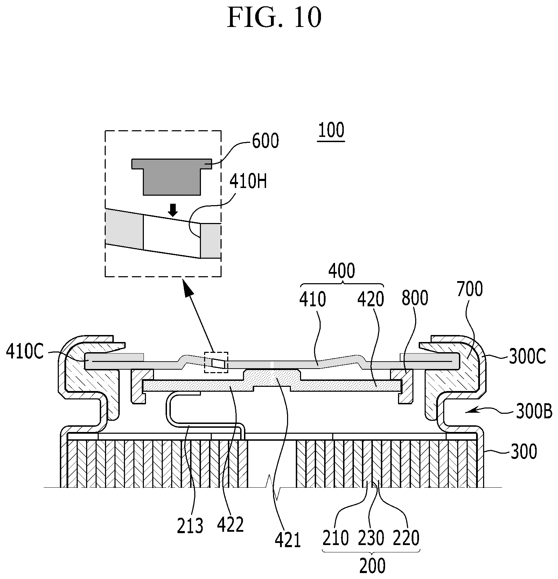

Next, a method for manufacturing a secondary battery according to another embodiment of the present disclosure will be described in detail with reference to Figs. 10 to 13 and the like. However, portions overlapping with the above contents will be omitted in order to avoid repetition of the description.

Figs. 10 to 13 are cross-sectional views which explains a method for manufacturing a secondary battery according to another embodiment of the present disclosure.

First, referring to Figs. 3 and 6 , a method for manufacturing a secondary battery according to another embodiment of the present disclosure includes a step of housing the electrode assembly 200 in the battery case 300 having an opened upper part and a step of coupling the cap assembly 400 formed with the discharge hole 410H to the opened upper part of the battery case 300. Since the above steps are the same as those described above, further description will be omitted.

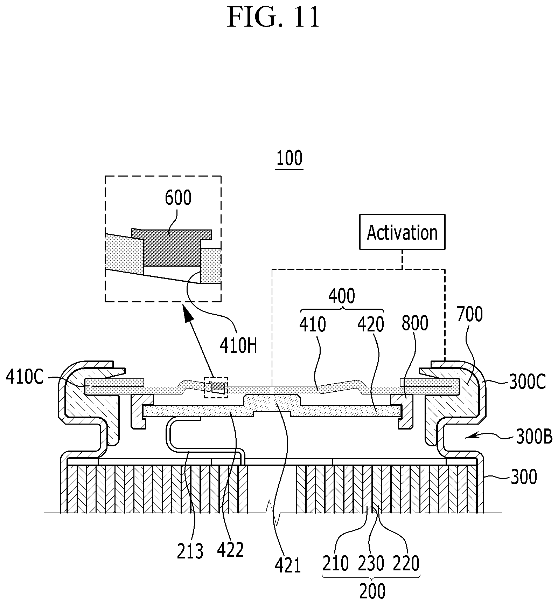

Next, referring to Figs. 10 and 11, the manufacturing method of the secondary battery according to the present embodiment includes a temporary sealing step of temporarily sealing the discharge hole 410H. Specifically, the discharge hole 410H may be covered with the cover member 600 to temporarily close the discharge hole 410H. As an example, the cover member 600 having a portion corresponding to the diameter of the discharge hole 410H can be inserted into the discharge hole 410H.

Next, referring to Fig. 11, the manufacturing method of the secondary battery according to the present embodiment includes an activation step of activating the electrode assembly 200. The activation step may be performed after the temporary sealing step. In a state in which the discharge hole 410H is temporarily sealed by the cover member 600, the activation step may be performed by repeating charge and discharge with a constant current or constant voltage within a certain range. The activation step is a step of repeatedly performing charge and discharge for the purpose of forming a solid electrolyte interface (SEI) film on the surface of the anode and selecting low voltage.

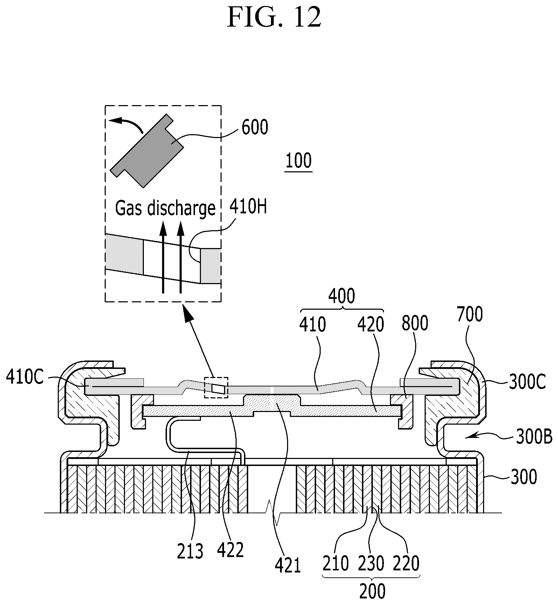

Next, referring to Fig. 12, the manufacturing method of the secondary battery according to the present embodiment includes a temporary sealing release step of releasing the temporary sealing state of the discharge hole 410H. Specifically, the discharge hole 410H may be opened again by removing the cover member 600 from the discharge hole 410H. The temporary sealing release step may be performed after the activation step.

In the gas discharge step, the gas generated in the activation step may be discharged to the outside through the discharge hole 410H. The step of discharging gas may be performed simultaneously with the temporary seal release step or immediately after the temporary sealing release step. In other words, while the discharge hole 410H is again opened through the temporary sealing release step, the gas generated inside the secondary battery 100 during the activation step may be discharged to the outside through the discharge hole 410H.

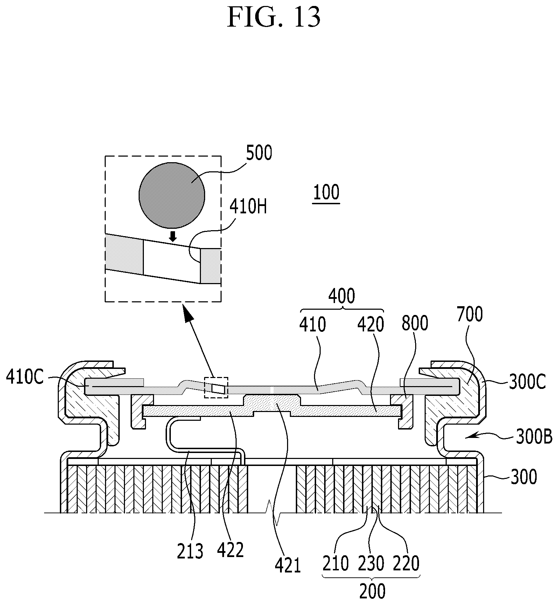

Next, referring to Fig. 13, a sealing step of filling the block 500 in the discharge hole 410H may be followed. The sealing step may be performed after the gas discharging step.

In the sealing step, the block 500 may be joined to the discharge hole 410H by ball welding. The discharge hole 410H may be a circular through-hole, and the block 500 may be in the form of a ball. The block 500 is strongly launched into the discharge hole 410H, so that the block 500 can be inserted into the discharge hole 410H. That is, ball welding may be performed. This sealing step may be the same as or similar to the contents described above with reference to Fig. 8. Further description of the sealing step will be omitted to avoid repetition of the description.

As described above, the secondary battery 100 manufactured according to another embodiment of the present disclosure is finally sealed after discharging the gas generated in the activation step, thereby capable of solving problems such as expansion and deformation of the electrode assembly due to residual gas, or problems such as lithium precipitation caused by residual gas bubbles.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The secondary battery or the battery module according to embodiments of the present disclosure described above can be mounted together with various control and protection systems such as BMS (Battery Management System), and a cooling system to form a battery pack.

The secondary battery, the battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

### [Description of Reference Numerals]

100: secondary battery
400: cap assembly
410: safety vent
410H: discharge hole
500: block

## Claims

1. A secondary battery (100) comprising:
an electrode assembly (200);
a cylindrical battery case (300) that houses the electrode assembly (200) and has an open upper end (300U); and
a cap assembly (400) coupled to the open upper end (300U) of the battery case (300),
wherein the cap assembly (400) comprises a safety vent (410) that is a disk-shaped plate exposed to the outside at the upper end (300U) of the battery case (300), wherein the safety vent (410) has a groove-like notch structure configured to be broken in response to internal pressure of the secondary battery (100) to discharge internal gas,
wherein a discharge hole (410H) is formed in the safety vent (410), and
wherein the discharge hole (410H) is filled and sealed with a sealing block (500).

2. The secondary battery (100) according to claim 1 wherein:
The sealing block (500) is joined to the discharge hole (410H) by ball welding.

3. The secondary battery (100) according to claim 1 wherein:
one end of the upper part of the battery case (300) is bent to wrap around an outer peripheral part of the safety vent (410) and form a crimping part (300C).

4. The secondary battery (100) according to claim 3 wherein:
the safety vent (410) comprises a curling part (410C) that is bent at the outer peripheral part of the safety vent (410), and
the crimping part (300C) wraps around the curling part (410C) to form a crimp coupling.

5. The secondary battery (100) according to claim 4 wherein:
the cap assembly (400) comprises a current interrupt device (420) located below the safety vent (410),
a central part of the safety vent (410) and the current interrupt device (420) are connected to each other, and
the discharge hole (410H) is located between the central part and the outer peripheral part of the safety vent (410).

6. A method for manufacturing a secondary battery (100), the method comprising:
a step of housing an electrode assembly (200) in a cylindrical battery case (300) having an open upper end (300U);
a step of coupling a cap assembly (400) formed with a discharge hole (410H) to the open upper end (300U) of the battery case (300);
a gas discharge step of discharging gas inside the battery case (300) to the outside through the discharge hole (410H); and
a sealing step of filling a sealing block (500) in the discharge hole (410H),
wherein the cap assembly (400) comprises a safety vent (410) that is a disk-shaped plate exposed to the outside from the upper end (300U) of the battery case (300), and wherein the safety vent (410) has a groove-like notch structure configured to be broken in response to internal pressure of the secondary batter (100) to discharge internal gas, and
wherein the discharge hole (410H) is formed in the safety vent (410).

7. The method according to claim 6 wherein:
in the sealing step, the sealing block (500) is joined to the discharge hole (410H) by ball welding.

8. The method according to claim 7 wherein:
a diameter of the sealing block (500) is larger than an inner diameter of the discharge hole (410H), and
the sealing block (500) is launched into the discharge hole (410H), so that the sealing block (500) is inserted into the discharge hole (410H).

9. The method according to claim 6 wherein:
the step of coupling the cap assembly (400) comprises a step of bending one end of the upper part of the battery case (300) to form a crimping part (300C) that wraps around the safety vent (410).

10. The method according to claim 9 wherein:
the safety vent (410) comprises a curling part (410C) that is bent at an outer peripheral part of the safety vent (410), and
a crimp coupling is made so that the crimping part (300C) wraps around the curling part (410C).

11. The method according to claim 6, further comprising,
a pre-activation step of activating the electrode assembly (200) by charging the secondary battery (100) at a low state-of-charge or by repeated charging and discharging the secondary battery with a constant current or constant voltages in a certain range,
wherein in the gas discharge step, gas generated in the pre-activation step is discharged to the outside through the discharge hole (410H).

12. The method according to claim 11, further comprising,
an activation step of activating the electrode assembly (200) by repeatedly charging and discharging the secondary battery (100) to form a solid electrolyte interface, SEI, film on an anode of the secondary battery (100),
wherein the activation step is performed after the sealing step.

13. The method according to claim 6, further comprising,
a temporary sealing step of temporarily sealing the discharge hole (410H);
an activation step of activating the electrode assembly (200) by repeatedly charging and discharging the secondary battery (100) to form a solid electrolyte interface, SEI, film on an anode of the secondary battery (100); and
a temporary sealing release step of releasing the temporary sealing state of the discharge hole (410H),
wherein in the gas discharge step, gas generated in the activation step is discharged to the outside through the discharge hole (410H).

14. The method according to claim 13, wherein:
the gas discharge step is performed simultaneously with the temporary seal release step or immediately after the temporary sealing release step.

15. The method according to claim 13, wherein:
the sealing step is performed after the gas discharge step.

## Patentansprüche

1. Sekundärbatterie (100), umfassend:
eine Elektrodenanordnung (200);
ein zylindrisches Batteriegehäuse (300), das die Elektrodenanordnung (200) aufnimmt und ein offenes oberes Ende (300U) aufweist; und
eine Kappenanordnung (400), die mit dem offenen oberen Ende (300U) des Batteriegehäuses (300) verbunden ist,
wobei die Kappenanordnung (400) eine Sicherheitsentlüftung (410) umfasst, bei der es sich um eine scheibenförmige Platte handelt, die an dem oberen Ende (300U) des Batteriegehäuses (300) nach außen freiliegt, wobei die Sicherheitsentlüftung (410) eine nutartige Kerbenstruktur aufweist, die so konfiguriert ist, dass sie als Reaktion auf den Innendruck der Sekundärbatterie (100) gebrochen wird, um internes Gas abzugeben,
wobei ein Abgabeloch (410H) in der Sicherheitsentlüftung (410) ausgebildet ist, und
wobei das Abgabeloch (410H) mit einem Dichtungsblock (500) gefüllt und abgedichtet ist.

2. Sekundärbatterie (100) nach Anspruch 1, wobei:
der Dichtungsblock (500) durch Kugelschweißen mit dem Abgabeloch (410H) verbunden ist.

3. Sekundärbatterie (100) nach Anspruch 1, wobei:
ein Ende des oberen Teils des Batteriegehäuses (300) so gebogen ist, dass es sich um einen äußeren Umfangsteil der Sicherheitsentlüftung (410) wickelt und einen Crimpteil (300C) bildet.

4. Sekundärbatterie (100) nach Anspruch 3, wobei:
die Sicherheitsentlüftung (410) einen Bördelteil (410C) umfasst, der am äußeren Umfangsteil der Sicherheitsentlüftung (410) gebogen ist, und
der Crimpteil (300C) sich um den Bördelteil (410C) wickelt, um eine Crimpverbindung zu bilden.

5. Sekundärbatterie (100) nach Anspruch 4, wobei:
die Kappenanordnung (400) eine Stromunterbrechungsvorrichtung (420) umfasst, die sich unter der Sicherheitsentlüftung (410) befindet,
ein Mittelteil der Sicherheitsentlüftung (410) und die Stromunterbrechungsvorrichtung (420) miteinander verbunden sind, und
das Abgabeloch (410H) sich zwischen dem Mittelteil und dem äußeren Umfangsteil der Sicherheitsentlüftung (410) befindet.

6. Verfahren zum Herstellen einer Sekundärbatterie (100), wobei das Verfahren umfasst:
einen Schritt des Aufnehmens einer Elektrodenanordnung (200) in einem zylindrischen Batteriegehäuse (300) mit einem offenen oberen Ende (300U);
einen Schritt des Verbindens einer Kappenanordnung (400), die mit einem Abgabeloch (41oH) ausgebildet ist, mit dem offenen oberen Ende (300U) des Batteriegehäuses (300);
einen Gasabgabeschritt des Abgebens von Gas im Inneren des Batteriegehäuses (300) nach außen durch das Abgabeloch (410H); und
einen Dichtungsschritt des Füllens eines Dichtungsblocks (500) in das Abgabeloch (410H),
wobei die Kappenanordnung (400) eine Sicherheitsentlüftung (410) umfasst, bei der es sich um eine scheibenförmige Platte handelt, die von dem oberen Ende (300U) des Batteriegehäuses (300) nach außen freiliegt, und wobei die Sicherheitsentlüftung (410) eine nutartige Kerbenstruktur aufweist, die so konfiguriert ist, dass sie als Reaktion auf den Innendruck der Sekundärbatterie (100) gebrochen wird, um internes Gas abzugeben, und
wobei das Abgabeloch (410H) in der Sicherheitsentlüftung (410) ausgebildet ist.

7. Verfahren nach Anspruch 6, wobei:
in dem Dichtungsschritt der Dichtungsblock (500) durch Kugelschweißen mit dem Abgabeloch (410H) verbunden wird.

8. Verfahren nach Anspruch 7, wobei:
ein Durchmesser des Dichtungsblocks (500) größer als ein Innendurchmesser des Abgabelochs (410H) ist, und
der Dichtungsblock (500) in das Abgabeloch (41oH) eingeführt wird, so dass der Dichtungsblock (500) in das Abgabeloch (410H) eingeführt wird.

9. Verfahren nach Anspruch 6, wobei:
der Schritt des Verbindens der Kappenanordnung (400) einen Schritt des Biegens eines Endes des oberen Teils des Batteriegehäuses (300) umfasst, um einen Crimpteil (300C) zu bilden, der sich um die Sicherheitsentlüftung (410) wickelt.

10. Verfahren nach Anspruch 9, wobei:
die Sicherheitsentlüftung (410) einen Bördelteil (410C) umfasst, der an einem äußeren Umfangsteil der Sicherheitsentlüftung (410) gebogen ist, und
eine Crimpverbindung so hergestellt wird, dass sich der Crimpteil (300C) um den Bördelteil (410C) wickelt.

11. Verfahren nach Anspruch 6, ferner umfassend:
einen Voraktivierungsschritt des Aktivierens der Elektrodenanordnung (200) durch Laden der Sekundärbatterie (100) in einem niedrigen Ladezustand oder durch wiederholtes Laden und Entladen der Sekundärbatterie mit einem konstanten Strom oder konstanten Spannungen in einem bestimmten Bereich,
wobei in dem Gasabgabeschritt in dem Voraktivierungsschritt erzeugtes Gas durch das Abgabeloch (410H) nach außen abgegeben wird.

12. Verfahren nach Anspruch 11, ferner umfassend:
einen Aktivierungsschritt des Aktivierens der Elektrodenanordnung (200) durch wiederholtes Laden und Entladen der Sekundärbatterie (100), um einen Festelektrolytgrenzflächen-, SEI-, Film auf einer Anode der Sekundärbatterie (100) zu bilden,
wobei der Aktivierungsschritt nach dem Dichtungsschritt durchgeführt wird.

13. Verfahren nach Anspruch 6, ferner umfassend:
einen temporären Dichtungsschritt des temporären Abdichtens des Abgabelochs (410H);
einen Aktivierungsschritt des Aktivierens der Elektrodenanordnung (200) durch wiederholtes Laden und Entladen der Sekundärbatterie (100), um einen Festelektrolytgrenzflächen-, SEI-, Film auf einer Anode der Sekundärbatterie (100) zu bilden; und
einen temporären Dichtungsfreigabeschritt des Freigebens des temporären Dichtungszustands des Abgabelochs (410H),
wobei in dem Gasabgabeschritt in dem Aktivierungsschritt erzeugtes Gas durch das Abgabeloch (410H) nach außen abgegeben wird.

14. Verfahren nach Anspruch 13, wobei:
der Gasabgabeschritt gleichzeitig mit dem temporären Dichtungsfreigabeschritt oder unmittelbar nach dem temporären Dichtungsfreigabeschritt durchgeführt wird.

15. Verfahren nach Anspruch 13, wobei:
der Dichtungsschritt nach dem Gasabgabeschritt durchgeführt wird.

## Revendications

1. Batterie secondaire (100) comprenant :
un ensemble d'électrodes (200) ;
un boîtier de batterie cylindrique (300) contenant l'ensemble d'électrodes (200) et possédant une extrémité supérieure ouverte (300U) ; et
un ensemble de couvercle (400) couplé à l'extrémité supérieure ouverte (300U) du boîtier de batterie (300),
l'ensemble de couvercle (400) comprenant une soupape de sécurité (410) qui se présente comme une plaque discoïde exposée à l'extérieur à l'extrémité supérieure (300U) du boîtier de batterie (300), la soupape de sécurité (410) présentant une structure d'encoche en forme de rainure configurée pour être brisée en réponse à une pression interne de la batterie secondaire (100) pour évacuer le gaz interne,
un orifice d'évacuation (410H) étant formé dans la soupape de sécurité (410), et
l'orifice d'évacuation (410H) étant rempli et scellé avec un bloc d'obturation (500).

2. Batterie secondaire (100) selon la revendication 1,
le bloc d'obturation (500) étant relié à l'orifice d'évacuation (410H) par soudage à billes.

3. Batterie secondaire (100) selon la revendication 1,
un bout de la partie supérieure du boîtier batterie (300) étant plié afin de s'enrouler autour d'une partie périphérique extérieure de la soupape de sécurité (410), et formant une élément de sertissage (300C).

4. Batterie secondaire (100) selon la revendication 3,
la soupape de sécurité (410) comprenant une partie de roulage (410C) pliée sur la partie périphérique extérieure de la soupape de sécurité (410), et
la partie de sertissage (300C) s'enroulant autour de la partie de roulage (410C) pour former un raccord serti.

5. Batterie secondaire (100) selon la revendication 4,
l'ensemble de couvercle (400) comprenant un dispositif d'interruption de courant (420) situé sous la soupape de sécurité (410),
une partie centrale de la soupape de sécurité (410) et le dispositif d'interruption de courant (420) étant reliés l'un à l'autre, et
l'orifice d'évacuation (410H) étant situé entre la partie centrale et la partie périphérique extérieure de la soupape de sécurité (410).

6. Procédé de fabrication d'une batterie secondaire (100), le procédé comprenant :
une étape d'installation d'un ensemble d'électrodes (200) dans un boîtier de batterie cylindrique (300) doté d'une extrémité supérieure ouverte (300U) ;
une étape de couplage d'un ensemble de couvercle (400) réalisé avec un orifice d'évacuation (410H) sur l'extrémité supérieure ouverte (300U) du boîtier de batterie cylindrique (300) ;
une étape d'évacuation du gaz comportant l'évacuation à l'extérieur, par l'orifice d'évacuation (410H), du gaz à l'intérieur du boîtier de batterie (300) ; et
une étape de remplissage d'un bloc d'obturation (500) dans l'orifice d'évacuation (410H),
l'ensemble de couvercle (400) comprenant une soupape de sécurité (410), qui se présente comme une plaque discoïde exposée à l'extérieur depuis l'extrémité supérieure (300U) du boîtier de batterie (300), la soupape de sécurité (410) présentant une structure d'encoche en forme de rainure configurée pour être brisée en réponse à une pression interne de la batterie secondaire (100) pour évacuer le gaz interne, et
l'orifice d'évacuation (410H) étant formé dans la soupape de sécurité (410).

7. Procédé selon la revendication 6,
dans lequel, à l'étape de scellement, le bloc d'obturation (500) est relié à l'orifice d'évacuation (410H) par soudage à billes.

8. Procédé selon la revendication 7,
un diamètre du bloc d'obturation (500) étant plus grand qu'un diamètre intérieur de l'orifice d'évacuation (410H), et
le bloc d'obturation (500) étant lancé dans l'orifice d'évacuation (410H), de sorte que le bloc d'obturation (500) soit inséré dans l'orifice d'évacuation (410H).

9. Procédé selon la revendication 6,
l'étape de couplage de l'ensemble de couvercle (400) comprenant une étape de cintrage d'un bout de la partie supérieure du boîtier de batterie (300) pour former une partie de sertissage (300C) s'enroulant autour de la soupape de sécurité (410).

10. Procédé selon la revendication 9,
la soupape de sécurité (410) comprenant une partie de roulage (410C) pliée sur une partie périphérique extérieure de la soupape de sécurité (410), et
un sertissage couplant étant réalisé afin que la partie de sertissage (300C) s'enroule autour de la partie de roulage (410C).

11. Procédé selon la revendication 6, comprenant en outre :
une étape de pré-activation comportant l'activation de l'ensemble d'électrodes (200) en chargeant la batterie secondaire (100) avec un faible niveau de charge, ou par des charges et décharges répétées de la batterie secondaire avec un courant continu ou des tensions constantes dans une certaine plage,
à l'étape d'évacuation du gaz, du gaz généré à l'étape de pré-activation étant évacué à l'extérieur par l'orifice d'évacuation (410H).

12. Procédé selon la revendication 11, comprenant en outre :
une étape d'activation de l'ensemble d'électrodes (200) par des charges et décharges répétées de la batterie secondaire (100) pour former un film d'interface d'électrolyte solide, SEI, sur une anode de la batterie secondaire (100), l'étape d'activation étant effectuée après l'étape de scellement.

13. Procédé selon la revendication 6, comprenant en outre :
une étape de scellement provisoire comportant le scellement provisoire de l'activation de l'orifice d'évacuation (410H) ;
une étape d'activation comportant l'activation de l'ensemble d'électrodes (200) par des charges et décharges répétées de la batterie secondaire (100) pour former un film d'interface d'électrolyte solide, SEI, sur une anode de la batterie secondaire (100) ; et
une étape de libération du scellement provisoire, comportant la libération du scellement provisoire de l'orifice d'évacuation (410H),
dans lequel, à l'étape d'évacuation du gaz, le gaz généré à l'étape d'activation est déchargé à l'extérieur à travers l'orifice d'évacuation (410H).

14. Procédé de fabrication selon la revendication 13,
l'étape d'évacuation du gaz étant effectuée simultanément avec l'étape de libération du scellement provisoire ou immédiatement après l'étape de libération du scellement provisoire.

15. Procédé de fabrication selon la revendication 13,
l'étape de scellement étant effectuée après l'étape d'évacuation du gaz.
